# EUROPÄISCHE PATENTSCHRIFT

(11) **EP 3 444 943 B1**
(45) Veröffentlichungstag und Bekanntmachung des Hinweises auf die Patenterteilung: **19.05.2021**
(21) Anmeldenummer: 18186932.2
(22) Anmeldetag: 02.08.2018
(51) Int. Cl.: H02P 29/032, H02P 29/024

(54) **ELEKTROMOTORISCHER ANTRIEB UND VERFAHREN ZUM BETREIBEN EINES ELEKTROMOTORISCHEN ANTRIEBS**
ELECTRIC MOTOR DRIVE AND METHOD FOR OPERATING SAME
ENTRAÎNEMENT PAR MOTEUR ÉLECTRIQUE ET PROCÉDÉ DE FONCTIONNEMENT D'UN ENTRAÎNEMENT PAR MOTEUR ÉLECTRIQUE

(30) Priorität: 08.08.2017 DE 102017213813
(43) Veröffentlichungstag der Anmeldung: 20.02.2019
(73) Patentinhaber: VOLKSWAGEN AKTIENGESELLSCHAFT, 38440 Wolfsburg (DE)
(72) Erfinder: Rodin, Alexander, 38104 Braunschweig (DE); Goering, Lars, 31224 Peine (DE); Zientek, Jens, 39365 Sommersdorf (DE)

(56) Entgegenhaltungen:
- DE-A1-102006 038 209
- DE-A1-102012 201 097
- US-A1- 2010 171 453

## Beschreibung

Die Erfindung betrifft einen elektromotorischen Antrieb und ein Verfahren zum Betreiben eines elektromotorischen Antriebs.

Insbesondere bei elektromotorischen Antrieben mit Drehrichtungsumkehr kann die Situation auftreten, dass der elektromotorische Antrieb generatorisch arbeitet, da die eingestellte Drehrichtung mit der realen Drehrichtung nicht übereinstimmt. Dies führt zu einer Rückspeisung von Strom in die Energiequelle, was situativ zu Problemen führen kann. Beispielsweise sind an der Energiequelle weitere Verbraucher angeschlossen, die aufgrund der Rückspeisung und einer dadurch gegebenenfalls hervorgerufenen Spannungserhöhung beschädigt werden.

Aus der US 2010/171453 A1 ist eine Motorsteuerung bekannt, umfassend eine Einheit zur Erkennung eines regenerativen Zustandes eines Motors sowie Mittel zur Reduzierung der Auswirkungen der rückgespeisten Energie
Die Offenlegungsschrit DE102006038209A1 offenbart einen Servolenkungsmotor eines Fahrzeugs und eine dazugehörige drehmomentsteuernde Antriebsschaltung mit einer von einem Bordnetz zur Vergügung gestellten Versorgungsspannung.

Der Erfindung liegt das technische Problem zugrunde, einen elektromotorischen Antrieb zu schaffen sowie ein Verfahren zum Betreiben eines elektromotorischen Antriebs zur Verfügung zu stellen, mittels derer das Problem der Rückspeisung reduziert wird.

Die Lösung des technischen Problems ergibt sich durch einen elektromotorischen Antrieb mit den Merkmalen des Anspruchs 1 sowie ein Verfahren mit den Merkmalen des Anspruchs 6. Weitere vorteilhafte Ausgestaltungen der Erfindung ergeben sich aus den Unteransprüchen.

Der elektromotorische Antrieb umfasst einen Elektromotor, ein Steuergerät und mindestens eine elektrische Energiequelle, wobei das Steuergerät derart ausgebildet ist, ein Soll-Moment des Elektromotors zu ermitteln und einzustellen. Weiter umfasst der elektromotorische Antrieb mindestens eine Sensorik, mittels derer ein generatorischer Betrieb des Elektromotors erfassbar ist, wobei das Steuergerät derart ausgebildet ist, in Abhängigkeit mindestens einer Messgröße mindestens einen Reduzierungsfaktor für das Soll-Moment im generatorischen Betrieb zu ermitteln. Hierdurch wird die Rückspeisung reduziert, da die Abweichung zwischen dem eingestellten Soll-Moment und dem aktuellen Moment reduziert wird. Dabei kann die Messgröße gleich einer Größe sein, die durch die Sensorik zur Erfassung des generatorischen Betriebs ist. Beispielsweise wird der Rückspeisestrom erfasst. Messgrößen und Größe der Sensorik können aber auch unterschiedlich sein.

Weiter ist die elektrische Energiequelle Bestandteil eines Bordnetzes eines Kraftfahrzeugs, wobei die mindestens eine Messgröße eine Bordnetzspannung und ein Rückspeisestrom in das Bordnetz ist. Der Rückspeisestrom ist dabei ein Bordnetzstrom mit negativem Vorzeichen. Die elektrische Energiequelle ist dabei vorzugsweise eine Batterie, die gegebenenfalls durch einen Generator gestützt wird. Anschaulich ist dabei der Rückspeisestrom die Ursache und die Bordnetzspannung die Wirkung, d.h. durch die Ladung der Batterie steigt die Bordnetzspannung.

Dabei werden beide Messgrößen berücksichtigt, wobei das Steuergerät einen ersten Reduzierungsfaktor in Abhängigkeit der Bordnetzspannung und einen zweiten Reduzierungsfaktor aufgrund des Rückspeisestroms bestimmt.

Im einfachsten Fall wird jeweils der größte der beiden Reduzierungsfaktoren verwendet oder alternativ jeweils der kleinste der beiden Reduzierungsfaktoren.

Alternativ können die beiden Reduzierungsfaktoren auch miteinander verknüpft werden. Beispielsweise kann ein arithmetischer Mittelwert verwendet werden, wobei gegebenenfalls eine Messgröße (z.B. die Bordnetzspannung) stärker gewichtet wird.

In einer Ausführungsform ist der Elektromotor ein Servo-Lenkmotor in einem Kraftfahrzeug, wo das Problem des generatorischen Betriebes häufig bei schnellen Lenkbewegungen auftritt.

In einer weiteren Ausführungsform steigt der Reduzierungsfaktor zwischen einem ersten Wert der Messgröße und einem zweiten Wert für die Messgröße linear. Dies erlaubt eine sehr einfache Berechnung des Reduzierungsfaktors. Allerdings sind auch andere funktionale Zusammenhänge denkbar.

Die Erfindung wird nachfolgend anhand eines bevorzugten Ausführungsbeispiels näher erläutert. Die Figuren zeigen:
- Fig. 1: ein schematisches Blockschaltbild einer Servo-Lenkung,
- Fig. 2: eine Ermittlung eines Reduzierungsfaktors für das Soll-Moment in einer ersten Betriebssituation und
- Fig. 3: eine Ermittlung eines Reduzierungsfaktors für das Soll-Moment in einer zweiten Betriebssituation.

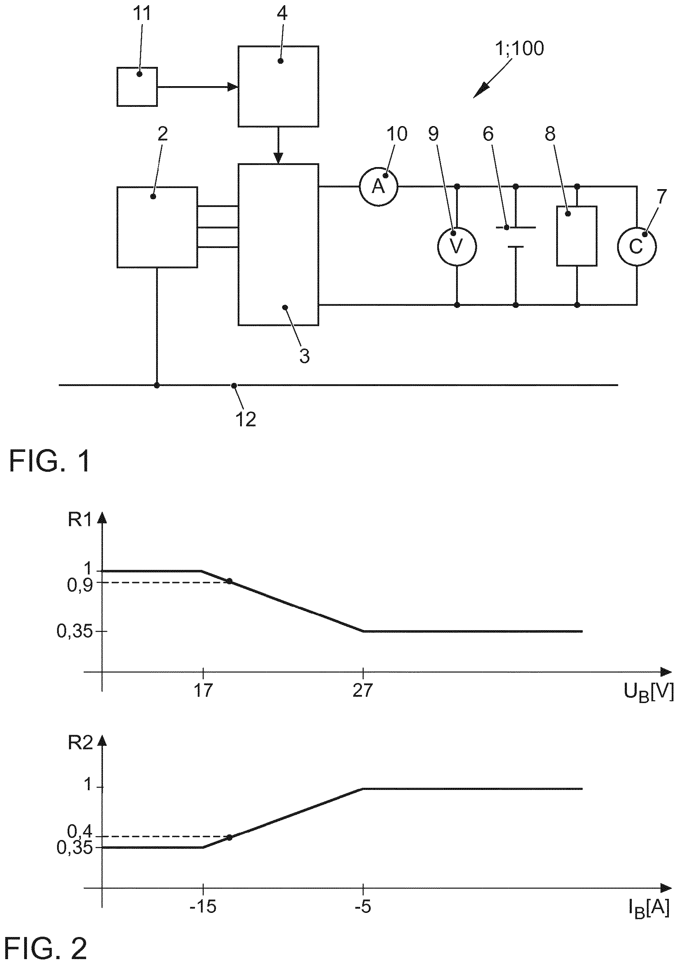

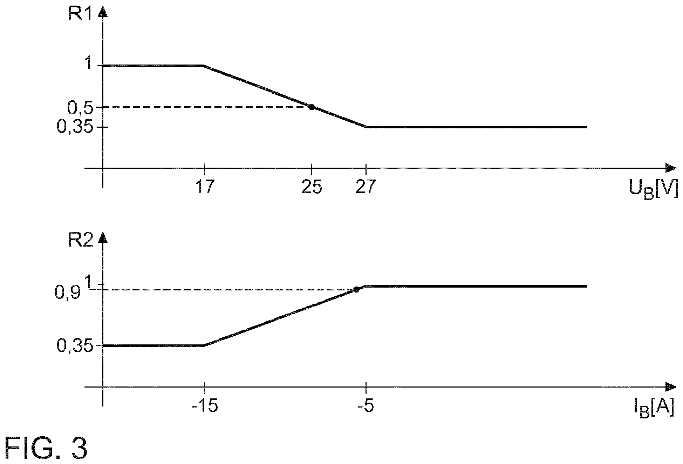

In der Fig. 1 ist ein Teil einer elektromechanischen Servo-Lenkung 1 als Beispiel für einen elektromotorischen Antrieb (100) dargestellt, die einen Elektromotor 2, einen Wechselrichter 3, ein Steuergerät 4 und ein Bordnetz 5 aufweisen. Das Bordnetz 5 weist eine Batterie 6, einen Generator 7, Verbraucher 8, eine erste Messeinrichtung 9 zur Erfassung der Bordnetzspannung U_{B} und eine zweite Messeinrichtung 10 zur Erfassung des Bordnetzstromes I_{B} auf. Das Steuergerät 4 wird dabei ebenfalls aus dem Bordnetz 5 versorgt, was aber nicht dargestellt ist. Weiter umfasst die Servo-Lenkung 1 einen Sensor 11, der einen Lenkraddrehwinkel oder ein Handmoment am Lenkrad erfasst und an das Steuergerät 4 übermittelt. In Abhängigkeit der Daten des Sensors 11 sowie gegebenenfalls weiterer Eingangsgrößen wie beispielsweise die Fahrzeuggeschwindigkeit ermittelt das Steuergerät 4 ein Soll-Moment, das der Elektromotor 2 aufbringen soll. Das Steuergerät 4 steuert hierzu den Wechselrichter 3 an, der dann den Elektromotor 2 bestromt. Über ein nicht dargestelltes Getriebe treibt dann der Elektromotor 2 eine Zahnstange 12 an. Um nun schädliche Rückwirkungen aufgrund eines generatorischen Betriebes des Elektromotors 2 zu reduzieren, sind in dem Steuergerät 4 Kennlinien für einen ersten Reduzierungsfaktor R1 aufgrund der Bordnetzspannung U_{B} und einen zweiten Reduzierungsfaktor R2 aufgrund des Bordnetzstromes I_{B}. Dies soll nun kurz anhand der Kennlinien in Fig. 2 und Fig. 3 erläutert werden.

Bis zu einer Bordnetzspannung U_{B} = 17 V ist der Reduzierungsfaktor R1 = 1. Ab einer Bordnetzspannung U_{B} = 27 V ist der Reduzierungsfaktor R1 = 0,35. Zwischen dem ersten Wert U_{B} = 27 V und dem zweiten Wert U_{B} = 17 V steigt der Reduzierungsfaktor R1 linear an. Zwischen einem negativen Bordnetzstrom I_{B} = -15 A und einem negativen Bordnetzstrom I_{B} = -5 A steigt der Reduzierungsfaktor R2 linear von 0,35 auf 1 an. Die Reduzierungsfaktoren R1, R2 sind also so gewählt, dass das Soll-Moment maximal auf ca. 1/3 reduziert wird. Ein Reduzierungsfaktor R = 1 bedeutet dabei keine Reduzierung des Soll-Moments.

Die Berechnung des resultierenden Reduzierungsfaktors soll nun kurz anhand zweier Situationen erläutert werden. In der Fig. 2 ist nun eine Situation dargestellt, wobei der Rückspeisestrom bzw. Bordnetzstrom -14 A beträgt, wobei die Bordnetzspannung U_{B} = 18 V beträgt. Damit ergibt sich ein Reduzierungsfaktor R1 = 0,9 und ein Reduzierungsfaktor R2 = 0,4. Wird nun jeweils der maximale der beiden Reduzierungsfaktoren R1, R2 gewählt, so wäre R = R1 = 0,9. Wird nun jeweils der minimale Reduzierungsfaktor R1, R2 gewählt, so wäre R = R2 = 0,4. Der Vorteil des maximalen Reduzierungsfaktors ist, dass der Fahrer möglichst wenig Rückwirkung spürt, d.h. sich das Lenkgefühl nur wenig verändert. Der Vorteil des minimalen Reduzierungsfaktors ist, dass die Sicherheit des Bordnetzes 5 optimiert wird.

In der Fig. 3 ist nun eine andere Situation dargestellt, wobei die Bordnetzspannung U_{B} = 25 V ist und der Bordnetzstrom I_{B} = -5,5 A beträgt. Somit ist R1 = 0,5 und R2 = 0,9. Entsprechend wird als maximaler Reduzierungsfaktor R2 gewählt bzw. beim minimalen Reduzierungsfaktor R1 gewählt.

Wie bereits ausgeführt, kann der Reduzierungsfaktor aber auch alleine aus R1 und R2 bestimmt werden oder aber die beiden Reduzierungsfaktoren verknüpft werden.

Im einfachsten Fall wird ein generatorischer Betrieb durch das Vorzeichen des Bordnetzstromes I_{B} bestimmt. Ist I_{B} negativ, so bedeutet dies einen Rückspeisestrom und damit einen generatorischen Betrieb. Allerdings kann auch durch Vergleich vom Handmoment oder Lenkraddrehwinkel mit der Umlaufrichtung des Elektromotors ein generatorischer Betrieb festgestellt werden.

## Patentansprüche

1. Elektromotorischer Antrieb (100), umfassend einen Elektromotor (2), ein Steuergerät (4) und mindestens eine elektrische Energiequelle, die Bestandteil eines elektrischen Bordnetzes (5) eines Kraftfahrzeugs ist, wobei das Steuergerät (4) derart ausgebildet ist, ein Soll-Moment des Elektromotors (2) zu ermitteln und einzustellen, **dadurch gekennzeichnet, daß** der elektromotorische Antrieb (100) mindestens eine Sensorik aufweist, mittels derer ein generatorischer Betrieb des Elektromotors (2) erfassbar ist, wobei das Steuergerät (4) derart ausgebildet ist, in Abhängigkeit mindestens einer Messgröße mindestens einen Reduzierungsfaktor (R1, R2) für das Soll-Moment zu ermitteln, wobei als Messgrößen sowohl eine Bordnetzspannung (U_{B}) als auch ein Rückspeisestrom (I_{B}) berücksichtigt werden, wobei das Steuergerät (4) derart ausgebildet ist, in Abhängigkeit der Bordnetzspannung (U_{B}) einen ersten Reduzierungsfaktor (R1) und in Abhängigkeit des Rückspeisestroms (I_{B}) einen zweiten Reduzierungsfaktor (R2) zu ermitteln.

2. Elektromotorischer Antrieb nach Anspruch 1, **dadurch gekennzeichnet, dass** das Steuergerät (4) derart ausgebildet ist, jeweils den maximalen oder den minimalen Reduzierungsfaktor der beiden Reduzierungsfaktoren (R1, R2) zu verwenden.

3. Elektromotorischer Antrieb nach Anspruch 1, **dadurch gekennzeichnet, dass** die beiden Reduzierungsfaktoren (R1, R2) zu einem Gesamtreduzierungsfaktor verknüpft werden.

4. Elektromotorischer Antrieb nach einem der vorangegangenen Ansprüche, **dadurch gekennzeichnet, dass** der Elektromotor (2) ein Servo-Lenkmotor in einem ServoLenksystem (1) in einem Kraftfahrzeug ist.

5. Elektromotorischer Antrieb nach einem der vorangegangenen Ansprüche, **dadurch gekennzeichnet, dass** der Reduzierungsfaktor (R1, R2) zwischen einem ersten Wert der Messgröße und einem zweiten Wert der Messgröße linear steigt.

6. Verfahren zum Betreiben eines elektromotorischen Antriebs (100), mittels eines Elektromotors (2), eines Steuergeräts (4) und mindestens einer elektrischen Energiequelle, die Bestandteil eines elektrischen Bordnetzes (5) eines Kraftfahrzeugs ist, wobei das Steuergerät (4) ein Soll-Moment des Elektromotors (2) ermittelt und einstellt, **dadurch gekennzeichnet, daß** mittels mindestens einer Sensorik ein generatorischer Betrieb des Elektromotors (2) erfasst wird, wobei das Steuergerät (4) in Abhängigkeit mindestens einer Messgröße mindestens einen Reduzierungsfaktor (R1, R2) für das Soll-Moment ermittelt, wobei dann das reduzierte Soll-Moment am Elektromotor (2) eingestellt wird, wobei als Messgrößen sowohl eine Bordnetzspannung (U_{B}) als auch ein Rückspeisestrom (I_{B}) berücksichtigt werden, wobei das Steuergerät (4) in Abhängigkeit der Bordnetzspannung (U_{B}) einen ersten Reduzierungsfaktor (R1) und in Abhängigkeit des Rückspeisestroms (I_{B}) einen zweiten Reduzierungsfaktor (R2) ermittelt.

## Claims

1. An electric motor drive (100), comprising an electric motor (2), a controller (4), and at least one electrical power source which is part of the vehicle electrical system (5) of a motor vehicle, wherein the controller (4) is designed to determine and adjust a nominal torque of the electric motor (2), **characterized in that** the electric motor drive (100) has at least one sensor system by means of which a regenerative operation of the electric motor (2) can be detected, wherein the controller (4) is designed to determine at least one reduction factor (R1, R2) for the nominal torque depending on at least one measured variable; wherein both a vehicle electrical system voltage (U_{B}) and a feedback current (I_{B}) are taken into account as measured variables; wherein the controller (4) is designed to determine a first reduction factor (R1) depending on the vehicle electrical system voltage (U_{B}) and a second reduction factor (R2) depending on the feedback current (I_{B}).

2. The electric motor drive according to claim 1, **characterized in that** the controller (4) is designed to respectively use the maximum or the minimum reduction factor of the two reduction factors (R1, R2).

3. The electric motor drive according to claim 1, **characterized in that** the two reduction factors (R1, R2) are combined to form an overall reduction factor.

4. The electric motor drive according to one of the preceding claims, **characterized in that** the electric motor (2) is a power steering motor in a power steering system (1) in a motor vehicle.

5. The electric motor drive according to one of the preceding claims, **characterized in that** the reduction factor (R1, R2) increases linearly between a first value of the measured variable and a second value of the measured variable.

6. A method for operating an electric motor drive (100) by means of an electric motor (2), a controller (4), and at least one electrical power source which is part of a vehicle electrical system (5) of a motor vehicle, wherein the controller (4) determines and adjusts a nominal torque of the electric motor (2), **characterized in that** a regenerative operation of the electric motor (2) is detected by means of at least one sensor system, wherein the controller (4) determines at least one reduction factor (R1, R2) for the nominal torque depending on at least one measured variable; wherein the reduced nominal torque at the electric motor (2) is then adjusted; wherein both a vehicle electrical system voltage (U_{B}) and a feedback current (I_{B}) are taken into account as measured variables; wherein the controller (4) determines a first reduction factor (R1) depending on the vehicle electrical system voltage (U_{B}) and a second reduction factor (R2) depending on the feedback current (I_{B}).

## Revendications

1. Entraînement par moteur électrique (100), comprenant un moteur électrique (2), un appareil de commande (4) et au moins une source d'énergie électrique, qui fait partie d'un réseau de bord (5) électrique d'un véhicule à moteur, l'appareil de commande (4) étant conçu de manière à déterminer et régler un couple théorique du moteur électrique (2), **caractérisé en ce que** l'entraînement par moteur électrique (100) comporte au moins un système de capteurs, au moyen duquel un fonctionnement en générateur du moteur électrique (2) peut être détecté, l'appareil de commande (4) étant conçu de manière à déterminer au moins un facteur de réduction (R1, R2) pour le couple théorique en fonction d'au moins une grandeur de mesure, aussi bien une tension de réseau de bord (U_{B}) qu'un courant de récupération (I_{B}) étant pris en compte comme grandeurs de mesure, l'appareil de commande (4) étant conçu de manière à déterminer un premier facteur de réduction (R1) en fonction de la tension de réseau de bord (U_{B}) et un second facteur de réduction (R2) en fonction du courant de récupération (I_{B}).

2. Entraînement par moteur électrique selon la revendication 1, **caractérisé en ce que** l'appareil de commande (4) est conçu de manière à utiliser respectivement le facteur de réduction maximal ou minimal des deux facteurs de réduction (R1, R2).

3. Entraînement par moteur électrique selon la revendication 1, **caractérisé en ce que** les deux facteurs de réduction (R1, R2) sont associés pour former un facteur de réduction total.

4. Entraînement par moteur électrique selon l'une quelconque des revendications précédentes, **caractérisé en ce que** le moteur électrique (2) est un moteur de direction assistée dans un système de direction assistée (1) d'un véhicule à moteur.

5. Entraînement par moteur électrique selon l'une quelconque des revendications précédentes, **caractérisé en ce que** le facteur de réduction (R1, R2) augmente de manière linéaire entre une première valeur de la grandeur de mesure et une seconde valeur de la grandeur de mesure.

6. Procédé de fonctionnement d'un entraînement par moteur électrique (100), au moyen d'un moteur électrique (2), d'un appareil de commande (4) et d'au moins une source d'énergie électrique, qui fait partie d'un réseau de bord (5) électrique d'un véhicule à moteur, l'appareil de commande (4) déterminant et réglant un couple théorique du moteur électrique (2), **caractérisé en ce qu'un** fonctionnement en générateur du moteur électrique (2) est détecté au moyen d'au moins un système de capteurs, l'appareil de commande (4) déterminant au moins un facteur de réduction (R1, R2) pour le couple théorique en fonction d'au moins une grandeur de mesure, le couple théorique réduit étant ensuite réglé sur le moteur électrique (2), aussi bien une tension de réseau de bord (U_{B}) qu'un courant de récupération (I_{B}) étant pris en compte comme grandeurs de mesure, l'appareil de commande (4) déterminant un premier facteur de réduction (R1) en fonction de la tension de réseau de bord (U_{B}) et un second facteur de réduction (R2) en fonction du courant de récupération (I_{B}).
